# EUROPEAN PATENT APPLICATION

(11) **EP 2 352 352 A1**
(43) Date of publication of application: **03.08.2011**
(21) Application number: 09823607.8
(22) Date of filing: 28.10.2009
(51) Int. Cl.: H04W 74/08, H04W 48/06

(54) **WIRELESS BASE STATION AND MOBILE TELECOMMUNICATION METHOD**

(30) Priority: 30.10.2008 JP 2008280281
(71) Applicant: NTT DOCOMO, INC., Chiyoda-ku Tokyo 100-6150 (JP)
(72) Inventor: ISHII, Hiroyuki, Chiyoda-ku Tokyo 100-6150 (JP); UMESH, Anil, Chiyoda-ku Tokyo 100-6150 (JP)
(74) Representative: HOFFMANN EITLE
(86) International application number: PCT/JP2009/068478
(87) International publication number: WO 2010/050497

(57) **Abstract**

A radio base station (eNB) according to the present invention includes: a first reception unit (11) configured to receive a preamble from a mobile station (UE); a response transmission unit (12) configured to transmit, to the mobile station (UE), a response to the preamble; and a second reception unit (13A) configured to determine a degree of congestion in a cell, and to receive, from the mobile station (UE), an uplink signal transmitted in response to a first control signal included in the response, wherein the second reception unit (13A) is configured to determine whether or not to discard the uplink signal, depending on whether or not the preamble is an initial connection preamble for performing an initial connection, when it is determined that the degree of congestion in the cell is high.

## Description

### TECHNICAL FIELD

The present invention relates to a radio base station and a mobile communication method.

### BACKGROUND ART

A next-generation communication schemes of schemes such as the Wideband Code Division Multiple Access (WCDMA) scheme, the High Speed Downlink Packet Access (HSDPA) scheme, and the High Speed Uplink Packet Access (HSUPA) scheme, i.e., the Long Term Evolution (LTE) is studied in the 3GPP, which is a group aiming to standardize WCDMA, and a task of establishing a specification is under progress.

As a radio access system in the LTE, the OFDMA (Orthogonal Frequency Division Multiplexing Access) scheme is defined for a downlink, and the SC-FDMA (Single-Carrier Frequency Division Multiple Access) scheme is defined for an uplink.

The "OFDMA scheme" is a transmission scheme in which a frequency band is divided into a plurality of narrow frequency bands (subcarriers), and data is loaded on each frequency band to transmit it. In this method, the subcarriers, which are partially overlapped, are densely arranged on the frequency without interference to each other, and thereby, a high-rate transmission is realized, and thus, the frequency use efficiency can be improved.

The "SC-FDMA scheme" is a transmission scheme in which the frequency band is divided, and the transmission is performed by using a frequency band different depending on a plurality of terminals, thereby enabling a decrease in interference among the terminals. The "SC-FDMA scheme" is characterized that a transmission power variation is small, and thus, it is possible to realize lower power consumption at the terminal and a broader coverage.

In the mobile communication system of the LTE scheme, the communication is performed such that at least one resource block is assigned to the mobile station UE in the both downlink and the uplink.

The radio base station eNB determines to which mobile stations UE, out of a plurality of mobile stations UE, the resource block is assigned for each subframe (1 ms in the LTE scheme) (this process is called "scheduling").

In the downlink, the radio base station eNB transmits a shared channel destined to a mobile station UE, by using at least one resource block assigned to the mobile station UE selected by scheduling.

In the uplink, the selected mobile station UE transmits the shared channel to the radio base station eNB by using at least one resource block assigned to the mobile station UE.

In the uplink, the shared channel is a PUSCH (Physical Uplink Shanred Channel), and in the downlink, the shared channel is a PDSCH (Physical Downlink Shanred Channel).

In the LTE, a Random Access procedure is used for a purpose of an initial connection, a handover, a data communication resuming, etc. A channel for the Random Access procedure is called a PRACH (Physical Random Access Channel).

In the Physical Random Access Channel, the mobile station UE transmits a random access preamble. The details of the Physical Random Access Channel and the random access preamble are defined in the 3GPP standardization, for example.

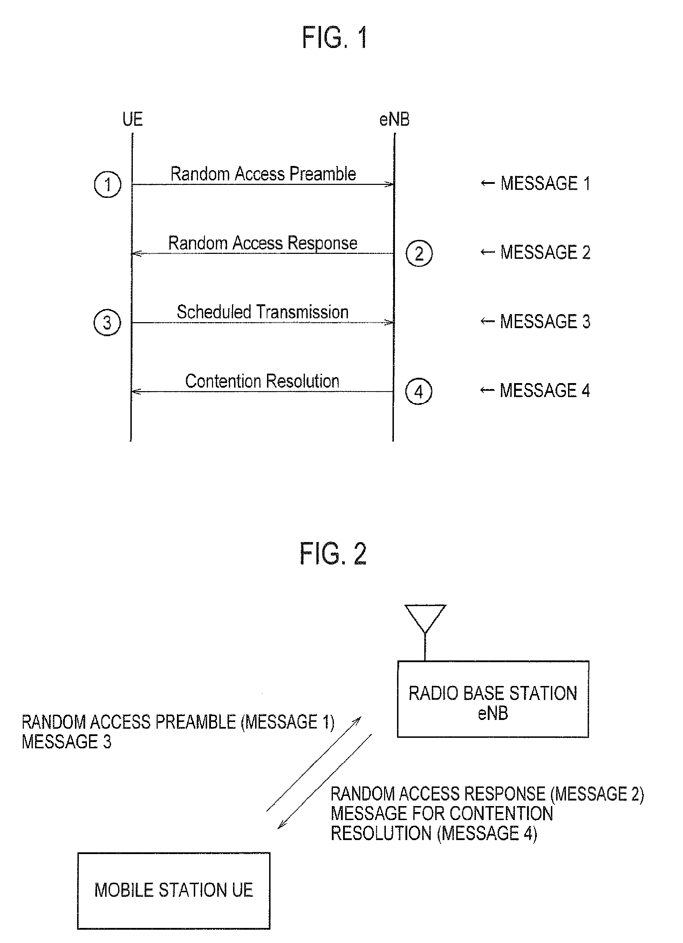

As illustrated in Fig. 1, the random access procedure is configured by four procedures. In each procedure, messages exchanged between the mobile station UE and the radio base station eNB are called, from the first to the fourth procedures in this order, a "message 1 (Random Access Preamble)", a "message 2 (Random Access Response)", a "message 3 (Scheduled Transmission) ", and a "messages 4 (message for Contention Resolution)".

In the first procedure, the mobile station UE transmits the random access preamble (preamble for the random access) to the radio base station eNB. By way of the random access preamble, an ID of the random access preamble is transmitted.

In the second procedure, the radio base station eNB transmits the random access response to the mobile station UE.

By way of the random access response, the ID of the random access preamble, timing adjustment information (Timing Advance), a UL Grant (UL Scheduling Grant), a temporary C-RNTI (cell specific-radio network temporary identifier), etc., are transmitted.

The UL Grant is a control signal instructing an uplink transmission, i.e., a transmission of the message 3. Information transmitted by the UL Grant is assignment information of an uplink resource block, a data size, a modulation method, transmission power information of the uplink for the message 3, and so on.

The RNTI is a temporary identifier for identifying a user, and the C-RNTI is a cell-specific user identifier.

In the third procedure, the mobile station UE transmits the message 3 to the radio base station eNB. By way of the message 3 (Scheduled Transmission), the identification information of the mobile station UE, such as the temporary C-RNTI and an NAS message, is transmitted.

In the fourthprocedure, the radio base station eNB transmits the message 4 (message for the Contention Resolution) to the mobile station UE.

### SUMMARY OF THE INVENTION

### PROBLEMS TO BE SOLVED BY THE INVENTION

As described above, in the LTE, the random access is used for the initial connection, the handover, the data communication resumption, etc.

However, generally, in the mobile communication system, there is a case where the number of mobile stations UE performing a communication with the radio base station eNB is significantly large in the cell, or where the number of mobile stations UE attempting to establish a connection with the radio base station eNB is significantly large.

That is, in the mobile communication system, there is a case where the degree of congestion in the cell is significantly high, or where the degree of congestion in the cell becomes abruptly high. For example, such a situation takes place in an event such as fireworks and year-end/new-year time.

In this case, the mobile station UE attempting to establish a connection with the radio base station eNB, more specifically, attempts to establish a connection with the radio base station eNB, by performing the above-described random access procedure.

As described above, when the number of mobile stations UE attempting to establish a connection with the radio base station eNB is significantly large, a great number of random access procedures are performed in a short period of time, and thus, there is a problem that a process load at the radio base station eNB becomes high, or the radio base station eNB cannot finish processing a great number of random access procedures.

Therefore, the present invention is intended to overcome the above-described problem. An object of the present invention is to provide a radio base station capable of containing a process load of a radio base station eNB to an appropriate level, even when the number of mobile stations UE attempting to establish a connection with a radio base station eNB is significantly large, and to provide a mobile communication method.

### MEANS FOR SOLVING THE PROBLEM

A first aspect of the present invention is summarized as a radio base station, including: a congestion-degree determination unit configured to determine a degree of congestion in a cell; a first reception unit configured to receive a preamble from a mobile station; a response transmission unit configured to transmit, to the mobile station, a response to the preamble; and a second reception unit configured to receive, from the mobile station, an uplink signal transmitted in response to a first control signal included in the response, wherein the second reception unit is configured to determine whether or not to discard the uplink signal, depending on whether or not the preamble is an initial connection preamble for performing an initial connection, when it is determined that the degree of congestion in the cell is high.

In the first aspect of the present invention, the congestion-degree estimate unit can be configured to determine that the degree of congestion in the cell is high, when the initial connection preamble for performing an initial connection received by the second reception unit is equal to or more than a predetermined threshold value in a predetermined time period interval.

In the first aspect of the present invention, the second reception unit can be configured to discard the uplink signal, when the preamble is the initial connection preamble.

In the first aspect of the present invention, the second reception unit can be configured to determine that the preamble can be the initial connection preamble and to discard the uplink signal, when the second control signal is not included in the uplink signal.

In the first aspect of the present invention, the preamble can be a preamble for a random access.

In the first aspect of the present invention, the first control signal can be a UL Grant that permits transmission of an uplink.

In the first aspect of the present invention, the second control signal can be control information indicating identification information of the mobile station.

In the first aspect of the present invention, the uplink signal can be a message 3 of a random access procedure.

In the first aspect of the present invention, the second reception unit can be configured to discard the uplink signal, when the preamble is not the initial connection preamble.

A second aspect of the present invention is summarized as a mobile communication method, including the steps of: (A) determining, at a radio base station, a degree of congestion in a cell; (B) receiving, at the radio base station, a preamble from a mobile station; (C) transmitting, from the radio base station to the mobile station, a response to the preamble; (D) transmitting, at the mobile station, an uplink signal, in response to a first control signal included in the response; and (E) determining, at the radio base station, whether or not to discard the uplink signal, depending on whether or not a second control signal is included in the uplink signal received from the mobile station, when it is determined that the degree of congestion in the cell is high.

### EFFECT OF THE INVENTION

As explained above, according to the present invention, it is possible to provide a radio base station capable of containing a process load of a radio base station eNB to an appropriate level even when the number of mobile stations UE attempting to establish a connection with a radio base station eNB is significantly large, and to provide a mobile communication method.

### BRIEF DESCRIPTION OF THE DRAWINGS

[Fig. 1] Fig. 1 is a sequence chart explaining a random access procedure in a general mobile communication system.
[Fig. 2] Fig. 2 is a diagram showing the entire configuration of a mobile communication system according to a first embodiment of the present invention.
[Fig. 3] Fig. 3 is a functional block diagram of a radio base station according to the first embodiment of the present invention.
[Fig. 4] Fig. 4 is a diagram explaining the radio base station according to the first embodiment of the present invention.
[Fig. 5] Fig. 5 is a diagram explaining the radio base station according to the first embodiment of the present invention.
[Fig. 6] Fig. 6 is a flowchart explaining an operation of the radio base station used in the mobile communication system according to this embodiment.
[Fig. 7] Fig. 7 is a flowchart explaining an operation of the radio base station used in the mobile communication system according to this embodiment.

### BEST MODES FOR CARRYING OUT THE INVENTION

### (Configuration of mobile communication system according to first embodiment of the present invention)

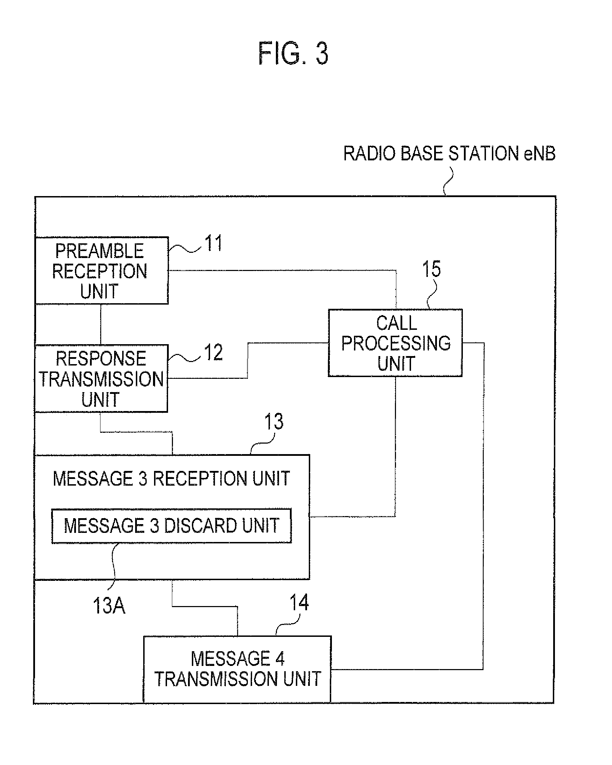

With reference to Fig. 2 and Fig. 3, the configuration of a mobile communication system according to a first embodiment of the present invention will be explained. It is noted that in this embodiment, a mobile communication system of the LTE scheme is explained as an example; however, the present invention can be applied to mobile communication systems of other schemes.

In such a mobile communication system of the LTE scheme, it is studied that as a radio access system, the "OFDMA (Orthogonal Frequency Division Multiple Access) scheme" is used for a downlink, and the "SC-FDMA (Single-Carrier Frequency Division Multiple Access) scheme" is used for an uplink.

In the mobile communication system according to this embodiment, a random access procedure is used in an initial connection, a handover, a data communication resumption, etc. The data communication resumption may be called "Data Resuming".

As illustrated in Fig. 2, in the random access procedure, the mobile station UE is configured to transmit a random access preamble and a message 3, etc., in the uplink, and the radio base station eNB is configured to transmit a random access response, a message for a convention resolution (message 4), etc., in the downlink.

As illustrated in Fig. 3, the radio base station eNB according to this embodiment includes a preamble reception unit 11, a response transmission unit 12, a message 3 reception unit 13, a message 4 transmission unit 14, and a call processing unit 15. The message 3 reception unit 13 further includes a message 3 discard unit 13A.

The preamble reception unit (first reception unit) 11 is configured to receive, in the first procedure of the above-described random access procedure, a preamble (e.g., a random access preamble) from the mobile station UE.

The preamble reception unit 11 is configured to receive either one of a shared random access preamble or an dedicated random access preamble, as the random access preamble.

The response transmission unit 12 is configured to transmit, in the second procedure of the above-described random access procedure, a response to the random preamble received by the preamble reception unit 11, to the mobile station UE.

The message 3 reception unit (second reception unit) 13 is configured to receive, in the third procedure of the above-described random access procedure, an uplink signal (specifically, the message 3 of the random access procedure) transmitted in response to a first control signal included in the response, from the mobile station UE.

For example, as the first control signal, a UL Grant, etc., permitting the transmission of the uplink are considered.

The message 3 discard unit 13A in the message 3 reception unit 13 is configured to determine whether or not the above-described uplink signal is discarded depending on whether or not the random access preamble is an initial connection preamble for performing an initial connection (Initial Access).

In this case, the message 3 discard unit 13A may be configured to determine whether or not the above-described uplink signal is discarded when the degree of congestion in the cell is high.

Moreover, the degree of congestion in the cell may mean information for communication limitation (Cell Barring) notified from a core network or information on the degree of congestion.

Alternately, the degree of congestion in the cell may be the number of users communicating in the cell, i.e., the number of mobile stations UE communicating in the cell. In this case, the greater the number of mobile stations UE, the higher the degree of congestion.

Herein, the number of users communicating may mean the number of mobile stations UE in an RRC Connected state, the number of mobile stations UE having data that should be communicated in a transmission buffer, and the number of mobile stations not in a DRX state, i.e., the number of mobile stations in a Non-DRX state. Further, instead of the number of mobile stations, the number of users communicating may mean a ratio of the number of mobile stations, e.g., a ratio of the number of mobile stations to the number of maximum simultaneous connections determined beforehand.

Alternately, the degree of congestion in the cell may mean the number of the random access preambles. That is, the degree of congestion in the cell may mean the number of random access preambles received in the preamble reception unit 11 in a predetermined time period interval. In this case, the greater the number of random access preambles, the higher the degree of congestion.

The number of the above-described random access preambles may be the number of shared random access preambles, the number of dedicated random access preambles, or a total of the number of shared random access preambles and the number of dedicated random access preambles.

Alternately, the degree of congestion in the cell may be the number of the uplink signals (specifically, the messages 3 of the random access procedure). That is, the degree of congestion in the cell may be the number of uplink signals received in the message 3 reception unit 13 in a predetermined time period interval. In this case, the greater the number of the uplink signals, the higher the degree of congestion.

The number of the above-described uplink signals may be the number of the uplink signals corresponding to the initial connection preambles for performing an initial connection, or may be the number of the uplink signals corresponding to preambles other than the initial connection preamble.

Alternately, the number of the uplink signals may be a total of the number of the uplink signals corresponding to the initial connection preambles and the number of the uplink signals corresponding to the preambles other than the initial connection preamble.

Alternately, the number of the above-described uplink signals may be the number of the uplink signals corresponding to the initial connection preambles for performing an initial connection, or may be the number of the uplink signals corresponding to preambles other than the initial connection preamble.

Moreover, the number of the uplink signals may be the number of uplink signals not including the second control signal, the number of uplink signals including the second control signal, or a total of the number of uplink signals not including the second control signal and the number of uplink signals including the second control signal. In this case, the above-described second control signal may include control information indicating identification information of the mobile station UE, for example.

For example, the message 3 discard unit 13A may be configured to discard the above-described uplink signal, when the random access preamble is the initial connection preamble.

That is, the message 3 discard unit 13A is configured not to discard the message 3 in the random access procedure for the data communication resumption (Data Resuming) or for the handover.

In such a handover, an "Intra-cell Handover" that is a handover from the cell to the cell, in addition to the handover from a cell other than the cell, is included. The "Intra-cell Handover" may be performed for "Reconfiguration" that is to change a setting of a communication between the mobile station UE and the radio base station eNB, for example.

On the other hand, the message 3 discard unit 13A may be configured to discard the above-described uplink signal, when the random access preamble is not the initial connection preamble.

In this case, the message 3 discard unit 13A may be configured to determine that the above-described random access preamble is the initial connection preamble, when the above-described uplink signal does not include the second control signal.

It is noted that the second control signal may include control information indicating identification information of the mobile station UE, for example.

That is, in the message 3 in the random access procedure for the data communication resumption and the handover, C-RNTI MAC control element is included, and thus, the message 3 discard unit 13A can determine that the message 3 not including the C-RNTI MAC control element is the initial connection preamble.

Moreover, the dedicated random access preamble is not the initial connection preamble.

A specific example in which the above-described discard process is performed based on the number of the uplink signals (specifically, the messages 3 of the random access procedure) will be described below.

More specifically, when the number of the uplink signals corresponding to the initial connection preambles received in a predetermined time period interval exceeds a predetermined threshold value, the message 3 discard unit 13A may perform a process of discarding the uplink signal corresponding to the initial connection preamble received in a remaining time in the predetermined time period interval.

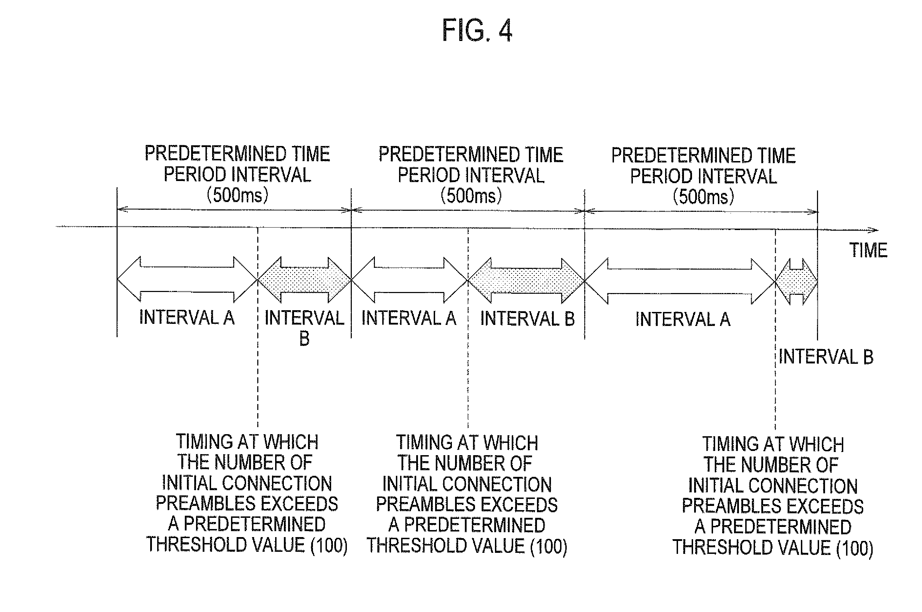

More specifically, as illustrated in Fig. 4, the message 3 discard unit 13A may count the number of the uplink signals corresponding to the initial connection preambles received in a predetermined time period interval (in Fig. 4, 500 ms), and then when the number of the uplink signals corresponding to the initial connection preambles (in Fig. 4, the number of the uplink signals corresponding to the initial connection preambles in an interval A) exceeds a predetermined threshold value (in Fig. 4, 100), the message 3 discard unit 13A may perform a process of discarding the uplink signal corresponding to the initial connection preamble received in a remaining time in the predetermined time period interval (in Fig. 4, interval B).

In such a case, the uplink signal corresponding to a preamble other than the initial connection preamble is not discarded irrespective of the intervals A and B. The above-described process is performed in each predetermined time period interval, as illustrated in Fig. 4.

Alternately, more specifically, when the number of the uplink signals corresponding to the initial connection preambles received in a predetermined time period interval exceeds a predetermined threshold value, the message 3 discard unit 13A may perform a process of discarding the uplink signal corresponding to the initial connection preamble received in a next predetermined time period interval.

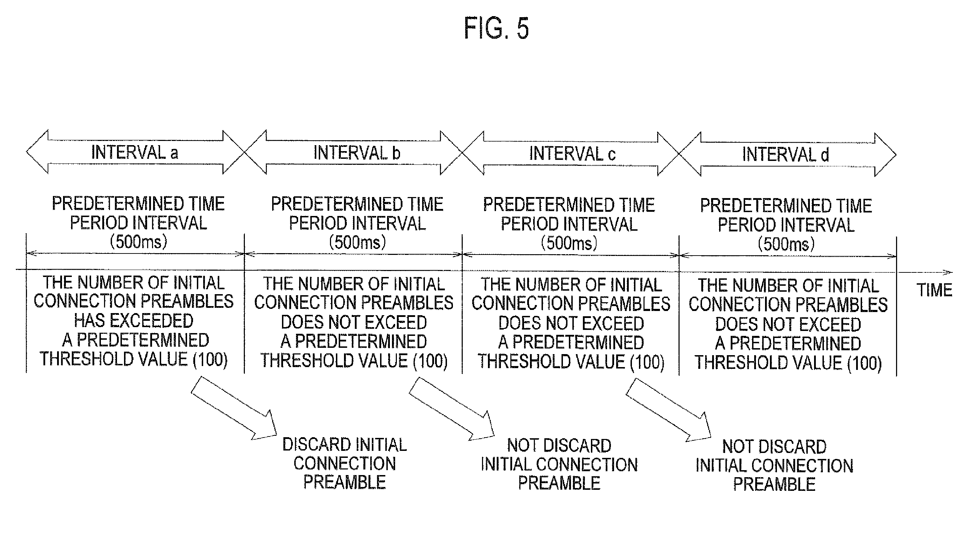

More specifically, as illustrated in Fig. 5, the number of the uplink signals corresponding to the initial connection preambles exceeds a predetermined threshold value (100) in an interval a, and therefore, the message 3 discard unit 13A may perform a process of discarding the uplink signal corresponding to the initial connection preamble in an interval b.

Moreover, the number of the uplink signals corresponding to the initial connection preambles does not exceed a predetermined threshold value (100) in the interval b, and therefore, the message 3 discard unit 13A may perform a process of not discarding the uplink signal corresponding to the initial connection preamble in an interval c.

Further, the number of the uplink signals corresponding to the initial connection preambles does not exceed a predetermined threshold value (100) in the interval c, and therefore, the message 3 discard unit 13A may perform a process of not discarding the uplink signal corresponding to the initial connection preamble in an interval d.

The process of "discarding the uplink signal corresponding to the initial connection preamble" in the above-described interval b may be a process of discarding the uplink signals corresponding to all of the received initial connection preambles, or may be a process of discarding 30% of the uplink signals corresponding to the received initial connection preambles. It is noted that a value of "30%" is an example, and thus, a different value may be adopted.

Alternately, the process of "discarding the uplink signal corresponding to the initial connection preamble" in the above-described interval b may be a process of discarding an uplink signal corresponding to an initial connection preamble above the 100 initial connection preambles, out of the uplink signals corresponding to the received initial connection preambles. It is noted that a value of "100" is an example, and thus, a different value may be adopted.

The message 4 transmission unit 14 is configured to transmit the message 4 to the mobile station UE, in the fourth procedure of the above-described random access procedure. As a result of the above-described process, the message 4 corresponding to the message 3 discarded in the message 3 discard unit 13A is not transmitted.

The call processing unit 15 is configured to perform a process relating to a connection between the radio base station eNB established by the random access procedure and the mobile station UE, for example, a process of setting a call, and a management of a status of the call.

### (Operation of the mobile communication system according to the first embodiment of the present invention)

With reference to Fig, 6, an operation of the mobile communication system according to this embodiment, specifically, an operation in the random access procedure of the radio base station eNB used in the mobile communication system according to this embodiment, will be explained.

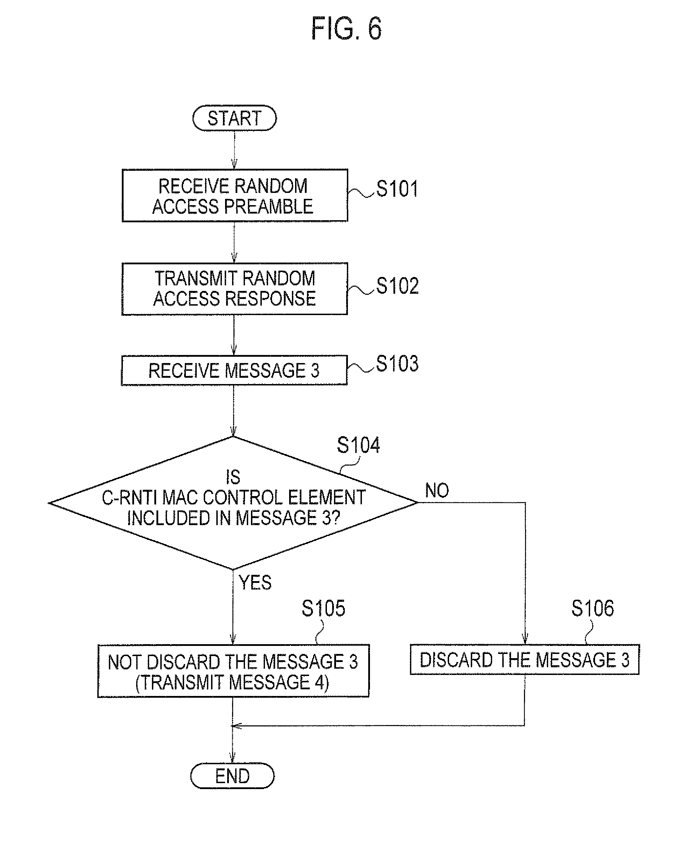

As illustrated in Fig. 6, in step S101, the radio base station eNB receives the random access preamble from the mobile station UE.

In step S102, the radio base station eNB transmits the response to the received random preamble, to the mobile station UE.

In step S103, the radio base station eNB receives, from the mobile station UE, the message 3 transmitted in response to the first control signal included in the above-described response.

In step S104, the radio base station eNB determines whether or not the C-RNTI MAC control element (second control signal) is included in the received message 3.

When it is determined that the C-RNTI MAC control element is included, the radio base station eNB does not discard the message 3 but transmits the message 4 to the mobile station UE in step S105.

On the other hand, when it is determined that the C-RNTI MAC control element is not included, the radio base station eNB discards the message 3 in step S106. In this case, the message 4 is not transmitted to the mobile station UE.

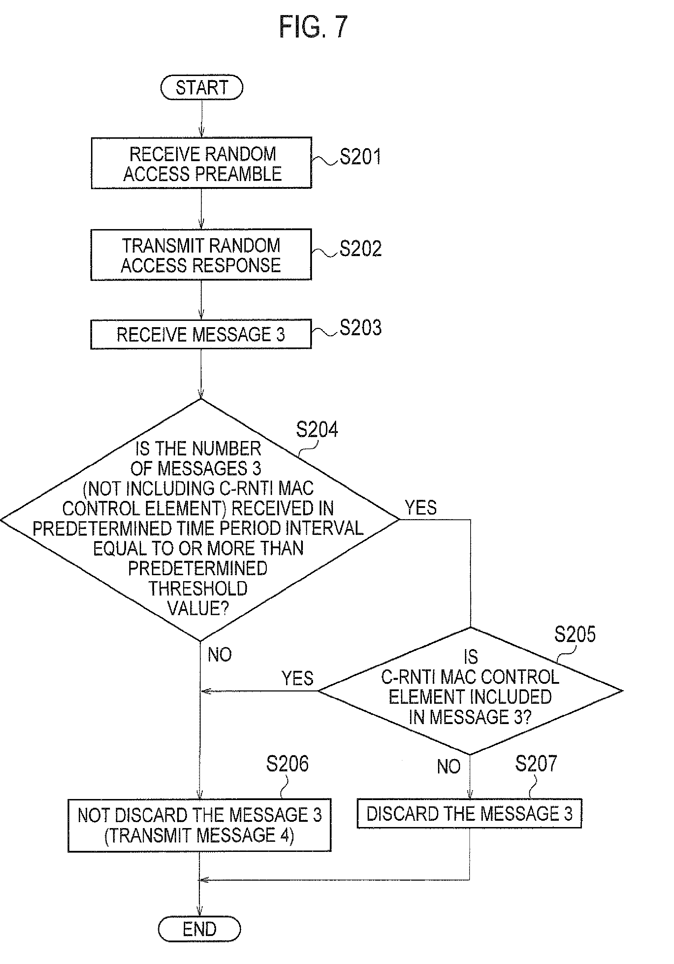

Subsequently, with reference to Fig. 7, an operation of the mobile communication system according to this embodiment, specifically, an operation in the random access procedure of the radio base station eNB used in the mobile communication system according to this embodiment, will be explained.

As illustrated in Fig. 7, in step S201, the radio base station eNB receives the random access preamble from the mobile station UE.

In step S202, the radio base station eNB transmits the response to the received random preamble, to the mobile station UE.

In step S203, the radio base station eNB receives, from the mobile station UE, the message 3 transmitted in response to the first control signal included in the above-described response.

In step S204, the radio base station eNB determines whether or not the number of messages 3 not including the "C-RNTI MAC control element" received in a predetermined interval is equal to or more than a predetermined threshold value.

In step S204, when the radio base station eNB determines that the number of messages 3 not including the "C-RNTI MAC control element" received in a predetermined interval is equal to or more than a predetermined threshold value (S204, "YES"), in step S205, the radio base station eNB determines whether or not the "C-RNTI MAC control element (second control signal)" is included in the received message 3.

In step S205, when it is determined that the "C-RNTI MAC control element" is included (S205, "YES"), in step S206, the radio base station eNB does not discard the message 3 but transmits the message 4 to the mobile station UE.

In step S205, when it is determined that the "C-RNTI MAC control element" is not included (S205, "NO"), in step S207, the radio base station eNB discards the message 3. In this case, the message 4 is not transmitted to the mobile station UE.

In step S204, when the radio base station eNB determines that the number of messages 3 not including the "C-RNTI MAC control element" received in a predetermined interval is not equal to or more than a predetermined threshold value (S204, "NO"), in step S206, the radio base station eNB does not discard the message 3 but transmits the message 4 to the mobile station UE.

### (Operation and Effect of the mobile communication system according to the first embodiment of the present invention)

According to the mobile communication system according to the first embodiment of the present invention, the radio base station eNB is capable of determining whether or not to accept the random access procedure depending on the use of the random access procedure (initial connection, handover, data communication resumption, etc.), and thus, it is possible to maintain a process load of the radio base station at an appropriate level, enabling the provision of a more appropriate high-quality mobile communication system.

Specifically, according to the mobile communication system according to the first embodiment of the present invention, it is possible to prioritize a mobile station UE that has already performed a communication over a mobile station UE that is about to start a new communication.

Moreover, according to the mobile communication system according to the first embodiment of the present invention, it is possible to prioritize a mobile station UE that is about to start a new communication over a mobile station UE that has already performed a communication.

The operation of the above-described mobile station UE or radio base station eNB may be implemented by a hardware, may also be implemented by a software module executed by a processor, and may further be implemented by the combination of the both.

The software module may be arranged in a storing medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the mobile station UE and the radio base station eNB. As a discrete component, such a storing medium and processor may be arranged in the mobile station UE and the radio base station eNB.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A radio base station, comprising:
a congestion-degree determination unit configured to determine a degree of congestion in a cell;
a first reception unit configured to receive a preamble from a mobile station;
a response transmission unit configured to transmit, to the mobile station, a response to the preamble; and
a second reception unit configured to receive, from the mobile station, an uplink signal transmitted in response to a first control signal included in the response, wherein
the second reception unit is configured to determine whether or not to discard the uplink signal, depending on whether or not the preamble is an initial connection preamble for performing an initial connection, when it is determined that the degree of congestion in the cell is high.

2. The radio base station according to claim 1, wherein
the congestion-degree estimate unit is configured to determine that the degree of congestion in the cell is high, when the initial connection preamble for performing an initial connection received by the second reception unit is equal to or more than a predetermined threshold value in a predetermined time period interval.

3. The radio base station according to claim 1, wherein
the second reception unit is configured to discard the uplink, signal, when the preamble is the initial connection preamble.

4. The radio base station according to claim 3, wherein
the second reception unit is configured to determine that the preamble is the initial connection preamble and to discard the uplink signal, when the second control signal is not included in the uplink signal.

5. The radio base station according to claim 1, wherein
the preamble is a preamble for a random access.

6. The radio base station according to claim 1, wherein
the first control signal is a UL Grant that permits transmission of an uplink.

7. The radio base station according to claim 4, wherein
the second control signal is control information indicating identification information of the mobile station.

8. The radio base station according to claim 1, wherein
the uplink signal is a message 3 of a random access procedure.

9. The radio base station according to claim 1, wherein
the second reception unit is configured to discard the uplink signal, when the preamble is not the initial connection preamble.

10. A mobile communication method, comprising the steps of:
(A) determining, at a radio base station, a degree of congestion in a cell;
(B) receiving, at the radio base station, a preamble from a mobile station;
(C) transmitting, from the radio base station to the mobile station, a response to the preamble;
(D) transmitting, at the mobile station, an uplink signal, in response to a first control signal included in the response; and
(E) determining, at the radio base station, whether or not to discard the uplink signal, depending on whether or not a second control signal is included in the uplink signal received from the mobile station, when it is determined that the degree of congestion in the cell is high.
